# EUROPEAN PATENT SPECIFICATION

(11) **EP 0 831 485 B1**
(45) Date of publication and mention of the grant of the patent: **10.04.2002**
(21) Application number: 97119881.7
(22) Date of filing: 24.02.1994
(51) Int. Cl.: G11B 25/04

(54) **Information recording and reproducing apparatus**
Informationsaufzeichnungs- und -wiedergabegerät
Appareil d'enregistrement et de reproduction d'informations

(30) Priority: 26.02.1993 JP 3836293; 04.06.1993 JP 13461293
(43) Date of publication of application: 25.03.1998
(62) Divisional of application: 94102744.3
(73) Proprietor: NIPPON CONLUX CO., LTD., Chiyoda-ku Tokyo-To (JP)
(72) Inventor: Hayashi, Hiroshi, Sakado-shi, Saitama-ken (JP); Ogino, Tadao, Higashi-Matsuyama-shi, Saitama-ken (JP); Matsuo, Minoru, Kawagoe-Shi, Saitama-ken (JP)
(74) Representative: Reichel, Wolfgang, Dipl.-Ing.

(56) References cited:
- DE-B- 1 099 201
- DE-C- 3 034 517
- US-A- 3 706 860
- US-A- 4 048 476
- PATENT ABSTRACTS OF JAPAN vol. 10, no. 243 (P-489), 21 August 1986 & JP 61 073260 A (MAT.SUSHITA ELECTRIC IND.), 15 April 1986,

## Description

The present invention relates to an information recording and a reproducing apparatus as stated in the preamble of claim 1.

In a prior apparatus of this type the card carriage is usually mounted within an apparatus casing. The front portion of the apparatus casing has a front panel mounted thereon and having the card receiving slot.

Recently, the thickness of the apparatus casing tends to be reduced. This entails the drawback that due to a reduced distance between a mounting surfce to which the apparatus is mounted and the card receiving slot the hand of an operator holding the optical memory card may contact the mounting surface. Therefore, it is difficult to insert the optical memory card into the card receiving slot.

US-A-3 706 860 reflecting the preamble of claim 1 discloses an information recording and reproducing apparatus comprising: a front panel having a horizontally extending card receiving slot with an upper wall surface and a lower wall surface for inserting a magnetic memory card having a central data storage region extending along a longitudinal axis of the card; a magnetic head for recording and reproducing data into and out of the data storage region of the magnetic memory card; and card transport rollers for driving the card by frictional engagement with opposite surfaces of the card along opposite longitudinal peripheries of the card. A card receiver plate positioned on the lower wall surface of the slot for supporting the card is partially projecting from the slot. When inserting or removing the card into or out of the slot, the card is positioned horizontally onto the projecting part of the receiver plate over a recess cut out in the front edge of the receiver plate. The recess facilitates finger gripping of the card for insertion or removal of the card. The upper front edge of the slot is chamfered. When the card is inserted or removed, the danger exists, that the data storage region is fretted at the lower edge line of the chamfered upper front edge of the slot.

US-A-4 048 476 discloses a similar apparatus as US-A-3 706 860 for magnetic cards, but without a card receiver plate projecting from the card receiving slot. The front panel of the casing of the apparatus has a vertically extending curved recessed portion crossing the horizontal card receiving slot in its central part for facilitating handling of the card by the operator such that the card can be fully inserted through the slot into a reader essembly. Thus, in this apparatus a similar danger exists that the straight edge portions of the slot, which are on both sides of the recessed panel portion, will fret the data strorage region of the card.

The EP-A-0 352 995 shows a similar apparatus as the US-A-3 707 860, but without a card receiver plate projecting from the card receiving slot. The upper and lower wall surfaces of the card receiving slot have parallel elongated recesses extending along the slot at positions opposing a like number of writing-reading heads formed on a magnetic sensor. Thus, dust or the like entering into and depositing on the lower wall surface of the slot, which surface is positioned opposing the magnetic sensor heads, will be moved, at least partly, into the recesses. Therefor, when the card moves along the lower wall surface of the slot, magnetic data lines closely contacting the sensor heads on the card recording face do not contact dust and the lower wall surface of the slot. Thus, the data lines of the card are not subject to damages such as scratches. Otherwise, however, the same danger exists that the data lines will be fretted by the edges at the entrance opening of the card receiving slot.

DE-C-30 34 517 shows an apparatus for magnetically recording and reproducing data onto and from a memory card inserted into a slot between a cover plate and a base plate. Flat abutment strips between these plates provide side walls of the slot. The cover and the base plate are provided each with a curved and chamfered recess in their front edges. The horizontal widths of these recesses is smaller than that of the slot. Therefore, since the memory card has a smaller width than the slot, the card may be fretted by the slot edges which are not recessed, when the card is inserted excentrically into the slot near one of the side walls.

The problem to be solved by the present invention is to provide an information recording and reproducing apparatus as state in the preamble of claim 1, into the card receiving slot of which an operator can insert the optical memory card without difficulty and without fretting the data storage region in the optical memory card.

The solution of this problem is stated in the characterizing part of claim 1.

In the operation of this apparatus, since the front panel includes the card reveiver surface in front of the card receiving slot, an operator can approache the optical memory card from above the card receiving slot down to the card receiving slot in front of the front panel and contact the front end of the optical memory card with the card receiver surface. This eliminates the need for a parallel movement of the optical memory card to the mounting surface (to which the information recording and reproducing apparatus is mounted) for inserting it into the card receicing slot. This also prevents the hand of the operator holding the optical memory card from contacting the mounting surface.

Since the upper edge line of the card receiving slot swells upward and the upper surface of the slot is bevelled and concave, the data storage region in the optical memory card is protected from being fretted due to a friction between the data storage region and the upper edge line of the card receiving slot.

A further protusion for protecting the data storage region of the optical memory card may be formed on the lower wall surface of the card receiving slot.

Fig. 1 is a perspective view of an information recording an reproducing apparatus according to an embodiment of the present invention.

Fig. 2 is a perspective view of part of a front panel of the information recording and reproducing apparatus of Fig. 1.

Fig. 3 is a plan view of a part of the front panel of Fig. 1, showing that an optical memory card is going to be inserted into the information recording and reproducing apparatus of Fig. 1.

Fig. 4 is a front elevation of the front panel of Fig. 1.

Fig. 5 is an illustration of a state of inserting the optical memory card into a card receiving slot of the information recording and reproducing apparatus of Fig. 1.

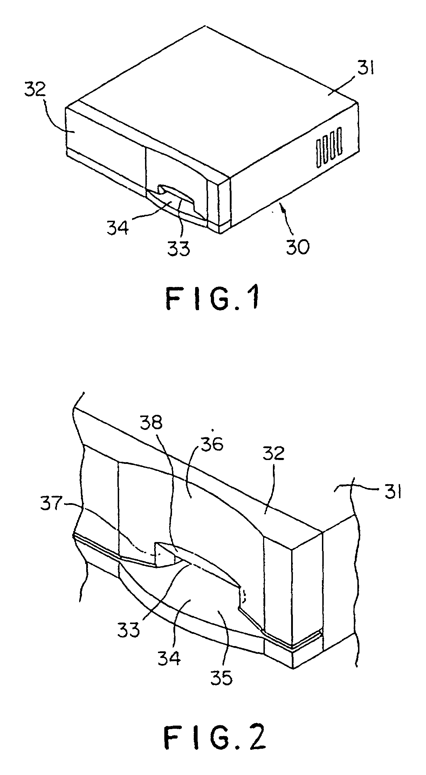

As shown in Fig. 1, the rectangular information recording and reproducing apparatus which is mounted on a mounting surface 30 has a reduced thickness. The apparatus comprises a main casing 31 in the form of a box. The front portion of the main casing 31 has a front panel 32 mounted thereon. The opposite sidewalls of the main casing 31 have ventilating openings.

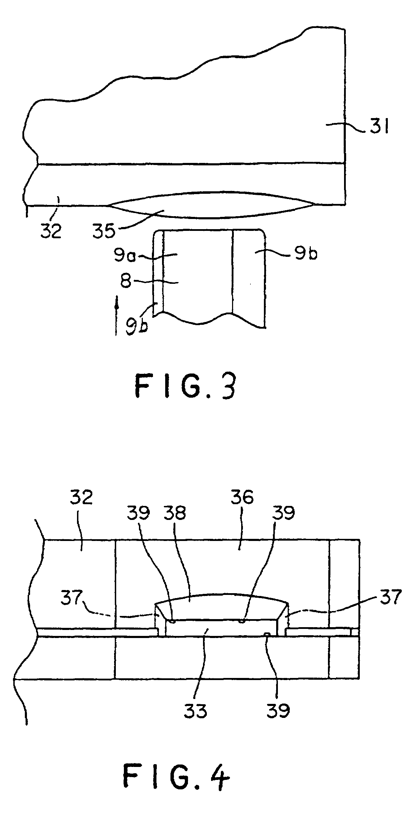

As shown in Fig. 2 and 3, the front panel 32 has a lying card receiving slot 33. The operator inserts an optical memory card 8 into the apparatus through the card receiving slot 33. The optical memory card 8 has a data storage region 9a and guard regions 9b. An optical head (not shown) within the main casing 31 can record and reproduce data into and out of the data storage region 9a, a card carriage (not shown) reveiving the card 8 in the casing 31 transfers the card 8 between the card receiving slot 33 and the optical head. The front panel 32 has a card receiving plate 34 adjoining the lower edge of the card receiving slot 33. The card receiving plate 34 has a convex front edge projecting forward from the front panel 32. The upper surface 35, receiving and contacting the optical memory card 8, of the card receiving plate 34 is flat and flush with the bottom surface of the card receiving slot 33. The upper surface 35 extends forward from the lower edge of the card receiving slot 33 and is generally sector-shaped. The maximum length of the card receiving plate 34 is larger than the length of the card receiving slot 33. A portion of the front panel 32 extending upward from the upper edge of the card receiving slot 33 has a concave surface 36 in the inner cylindrical form. The concave surface 36 has a length equal to the maximum length of the card receiving plate 34.

The side edges of the card receiving slot 33 have bevelled surfaces 37. The upper edge of the card receiving slot 33 has a bevelled surface 38. These bevelled surfaces 37 and 38 facilitate the operator to insert the optical memory card 8 into the card receiving slot 33. Therefore, a boundary between the concave surface 36 and the upper bevelled surface 38 forms the upper edge line of the card receiving slot 33. Since the concave surface 36 swells in a direction of the insertion of the optical memory card 8, the upper edge line of the card receiving slot 33 is convex upward.

As shown in FIG. 4, the upper and lower wall surfaces of the card receiving slot 33 have protrusions 39 contacting the guard regions 9b in the optical memory card 8 in order to protect the data storage region 9a in the optical memory card 8 from being fretted when the operator inserts the optical memory card 8 into the card receiving slot 33.

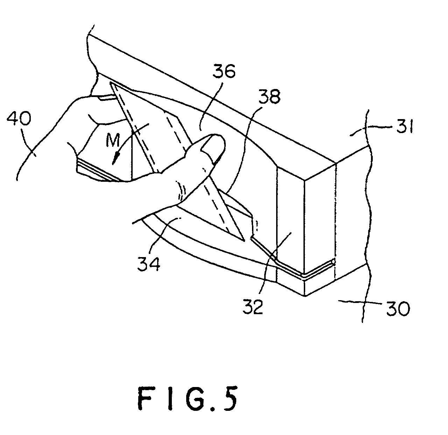

In operation, the operator, as shown in FIG. 5, approaches the optical memory card 8 from above the card receiving slot 33 down to the card receiving slot 33 in front of the front panel 32 on the apparatus mounted on the mounting surface 30. The operator then contacts the front end of the optical memory card 8 with the upper surface 35 of the card receiving plate 34. The operator then falls the optical memory card 8 in the direction of the arrow M and orients the optical memory card 8 along the axis of the card receiving slot 33.

In this embodiment, since the front panel 32 includes the card receiving plate 34, the operator can approache the optical memory card 8 from above the card receiving slot 33 down to the card receiving slot 33 in front of the front panel 32 and contacts the front end of the optical memory card 8 with the upper surface 35 of the card receiving plate 34. This eliminates the need for a parallel movement of the optical memory card 8 to the mounting surface 30 for inserting it into the card receiving slot 33. This also prevents a hand and fingers of the operator holding the optical memory card 8 from contacting the mounting surface 30 and facilitates the operator to smoothly insert the optical memory card 8 into the card receiving slot 33.

In addition, since the upper edge line of the card receiving slot 33 swells upward and the upper bevelled surface 38 is concave, this arrangement protects the data storage region 9a in the optical memory card 8 from being fretted due to a friction between the data storage region 9a and the upper edge line of the card receiving slot 33.

The present invention is not rigidly restricted to the embodiment described above. It is to be understood that a person skilled in the art can easily change and modify the present invention without departing from the scope of the invention defined in the appended claims.

## Claims

1. An information recording and reproducing apparatus comprising:
a front panel (32) having a horizontally extending card receiving slot (33), said card receiving slot having an upper wall surface and a lower wall surface and being provided for inserting an optical memory card (8) having a central data storage region (9a) extending along a longitudinal axis of the card and guard regions (9b) adjoining opposite longitudinal peripheries of the data storage region (9a);
an optical head for recording and reproducing data into and out of the data storage region (9a) of the optical memory card (8);
a card carriage retaining the optical memory card (8) and transferring the optical memory card (8) between the card receiving slot (33) and the optical head;
a card receiver (34) adjoins the lower edge of the card receiving slot (33) and projects forward from the front panel (32); and
an upper surface (35) of the card receiver (34) is flush with the lower wall surface of the card receiving slot (33), **characterized in that** a portion of the front panel (32) extending upward from the upper edge of the card receiving slot (33) has a concave surface (36) with a width exceding that of the slot (33);
protrusions (39) for protecting the data storage region (9a) of the optical memory card (8) are formed on the upper wall surface of the card receiving slot (33) and positioned so as to contact with the corresponding guard regions (9b) only
and the upper edge of the card receiving slot (33) has a bevelled surface (38), the boundary between the concave surface (36) and said bevelled surface (38) forming an upper edge line of the card receiving slot (33) which swells upward.

2. The apparatus of claim 1, **characterized in that** a further protrusion (39) for protecting the data storage region (9a) of the optical memory card (8) is formed on the lower wall surface of the card receiving slot (33).

## Patentansprüche

1. Informationsaufzeichnungs- und -wiedergabegerät, das aufweist:
eine Frontplatte (32) mit einem sich horizontal erstreckenden Kartenaufnahmeschlitz (33), der eine obere Wandfläche und eine untere Wandfläche aufweist und zur Einführung einer optischen Speicherkarte (8) vorgesehen ist, die einen mittleren Datenspeicherbereich (9a), der sich längs einer Längsachse der Karte erstreckt, und Schutzbereiche (9b) aufweist, die sich an sich gegenüberliegenden Längsrändern des Datenspeicherbereichs (9a) erstrecken;
einen optischen Kopf zum Aufzeichnen und Wiedergeben von Daten in dem bzw. aus dem Datenspeicherbereich (9a) der optischen Speicherkarte (8);
einen die optische Speicherkarte (8) haltenden Karten-Wagen, der die optische Speicherkarte (8) zwischen dem Kartenaufnahmeschlitz (3) und dem optischen Kopf befördert;
einen am unteren Rand des Kartenaufnahmeschlitzes (33) angrenzenden und nach vorn von der Frontplatte (32) abstehenden Kartenaufnehmer (34); und
eine obere Oberfläche (35) des Kartenaufnehmers (34), die mit der unteren Wandoberfläche des Kartenaufnahmeschlitzes (33) bündig ist,
**dadurch gekennzeichnet,**
**daß** sich ein Teil der Frontplatte (32) vom oberen Rand des Kartenaufnahmeschlitzes (33) nach oben erstreckt und eine konkave Oberfläche (36) aufweist, deren Breite die des Schlitzes (33) überschreitet;
**daß** Vorsprünge (39) zum Schutz des Datenspeicherbereichs (9a) der optischen Speicherkarte (8) an der oberen Wandoberfläche des Kartenaufnahmeschlitzes (33) ausgebildet und so angeordnet sind, daß sie nur mit den entsprechenden Schutzbereichen (9b) in Berührung kommen,
und **daß** der obere Rand des Kartenaufnahmeschlitzes (33) eine abgeschrägte Oberfläche (38) aufweist, wobei die Grenze zwischen der konkaven Oberfläche (36) und der abgeschrägten Oberfläche (38) eine obere Randkante des Kartenaufnahmeschlitzes (33) bildet, die nach oben gewölbt ist.

2. Gerät nach Anspruch 1,
**dadurch gekennzeichnet,**
**daß** ein weiterer Vorsprung (39) zum Schutz des Datenspeicherbereichs (9a) der optischen Speicherkarte (8) an der oberen Wandoberfläche des Kartenaufnahmeschlitzes (33) ausgebildet ist.

## Revendications

1. Appareil d'enregistrement et de reproduction d'informations comportant :
un panneau avant (32) comportant une fente (33) de réception de carte s'étendant horizontalement, ladite fente de réception de carte ayant une surface de paroi supérieure et une surface de paroi inférieure et étant prévue pour l'insertion d'une carte à mémoire optique (8) ayant une région centrale (9a) de stockage de données s'étendant suivant un axe longitudinal de la carte et des régions de garde (9b) adjacentes à des périphéries longitudinales opposées de la région (9a) de stockage de données ;
une tête optique pour l'enregistrement et la reproduction de données dans et depuis la région (9a) de stockage de données de la carte à mémoire optique (8) ;
un chariot de carte retenant la carte à mémoire optique (8) et transférant la carte à mémoire optique (8) entre la fente (33) de réception de carte et la tête optique ;
un réceptacle (34) de carte adjacent au bord inférieur de la fente (33) de réception de carte et faisant saillie vers l'avant par rapport au panneau avant (32) ; et
une surface supérieure (35) du réceptacle (34) de carte affleurant à la surface de paroi inférieure de la fente (33) de réception de carte (33), **caractérisé en ce que**
une partie du panneau avant (32) s'étendant vers le haut depuis le bord supérieur de la fente (33) de réception de carte présente une surface concave (36) ayant une largeur dépassant celle de la fente (33) ;
des protubérances (39) destinées à protéger la région (9a) de stockage de données de la carte à mémoire optique (8) sont formées sur la surface de paroi supérieure de la fente (33) de réception de carte et sont disposées de façon à n'entrer en contact qu'avec les régions de garde (9b) correspondantes,
et le bord supérieur de la fente (33) de réception de carte présente une surface biseautée (38), la limite entre la surface concave (36) et ladite surface biseautée (38) formant une ligne de bord supérieure de la fente (33) de réception de carte qui s'élargit vers le haut.

2. Appareil selon la revendication 1, **caractérisé en ce qu'**une protubérance supplémentaire (39) destinée à la protection de la région (9a) de stockage de données de la carte à mémoire optique (8) est formée sur la surface de la paroi inférieure de la fente (33) de réception de carte.
